# EUROPEAN PATENT SPECIFICATION

(11) **EP 4 002 985 B1**
(45) Date of publication and mention of the grant of the patent: **25.09.2024**
(21) Application number: 20735685.8
(22) Date of filing: 29.06.2020
(51) Int. Cl.: A01D 34/00, G05D 1/00

(54) **ROBOTIC LAWN MOWER CONTROL**
STEUERUNG FÜR AUTONOMEN RASENMÄHER
COMMANDE DE TONDEUSE À GAZON ROBOTIQUE

(30) Priority: 22.07.2019 GB 201910443
(43) Date of publication of application: 01.06.2022
(73) Proprietor: Kingdom Technologies Ltd, Glasgow G20 0SP (GB)
(72) Inventor: KANGRO, Joan, Glasgow (GB)
(74) Representative: Adams, James
(86) International application number: PCT/GB2020/051567
(87) International publication number: WO 2021/014117

(56) References cited:
- EP-A1- 2 926 642
- US-A1- 2012 265 391
- US-A1- 2016 165 795

## Description

### Field of Invention

The present invention relates to a method of controlling a robotic lawn mower, associated systems, apparatuses and computer programs.

### Background of the Invention

Mowing lawns with conventional mowing robots requires boundary cables to be placed in order to locate the perimeter of a plot of land to be mowed. When the mowing robots are in use, the cables constantly draw current, which is inefficient and consumes energy unnecessarily.

Installing the cables for a plot of land to be mowed can be very tedious and expensive. Where there regions that should not be mowed by the robot ("not-for-cutting" regions, e.g. bushes, a driveway of a house/garden or a putting green of a golf course) enclosed within the perimeter of the plot of land, cables have to be installed for individual subregions that avoid the "not-for cutting" regions. Furthermore, when new features are added to the plot of land, for example, a newly installed flower bed for a house/garden, re-wiring of the cables installed for the plot is required to adapt to the newly added features. This can become impractical for mowing a large plot.

Another problem with current mowing robots is that wires installed for a plot of land can cause safety issues for people using the plot, for example, homeowners and golf players.

Patents US8428776 B2 and US8706297 B2 disclose a virtual boundary feature that enables a robot mower to roam a fixed perimeter without employing boundary cables. In these prior art disclosures, the virtual boundary is defined by moving the robot mower around the perimeter, which is controlled by the user of the robot mower.

However, defining the boundary by users controlling the robot mower to move can be time consuming and inefficient, especially for a large area containing many excluded areas. In addition, this method does not have much flexiblity when modifications are required to the working area. Furthermore, the disclosure of these prior art documents indicates that users' control of the movement of the robot mower decides whether the robot mower can accurately track locations and identify excluded areas, which can be incomplete and error prone.

Alternatively, the prior art document "Classification and Segmentation of Satellite Orthoimagery Using Convolutional Neural Networks" (Martin Längkvist et al, Remote Sens. 2016, 8, 329.) discloses using satellite images and automatic boundary recognition to obtain a boundary map. This prior art disclosure states that a deep neural network based machine-learning algorithm can be used to achieve the purpose. Published Russian patent application RU2668319C discloses obtaining a map automatically derived from an overhead image of a plot of land to be mowed, wherein the robotic lawn mower processes the image and automatically identifies features about a certain area. However, without effective user inputs, it is difficult for a robotic lawn mower to define boundaries of lawns to be mowed by the use of such images only. This is particularly true where there are multiple unconnected subregions and unrecognised boundaries across subregions.

An other method and system of controlling a robotic lawn mower is known from document US 2012/265391 A1.

In summary, known approaches using robotic mowers take too much control away from the user, resulting in mowing activity that the user might not want. Furthermore, known robotic approaches do not address specific problems related to lawn mowing, especially where there are multiple lawn islands.

### Summary of invention

It is desirable to provide an improved method of controlling a robotic lawn mower, which overcomes at least some of the above-identified problems and enables a user to customise robotic mowing more accurately and conveniently.

According to a first aspect of the present invention, there is provided a method of controlling a robotic lawn mower, comprising the steps:
- obtaining an overhead image of a plot of land;
- defining a boundary of the plot of land using a graphical user interface;
- defining one or more mower-safe subregions within the boundary using the graphical user interface;
- assigning a control attribute to a mower-safe subregion;
- controlling the robotic lawn mower to traverse the plot of land while its operation in a subregion is based on (a) the location of the mower in relation to the plot of land, (b) the defined boundary and one or more subregions and (c) the assigned control attribute.

Preferably, the control attribute comprises a cutting attribute.

Preferably, the cutting attribute is selected from a group consisting of: cutting-height, cutting-time, cutting-frequency and cutting-pattern.

Preferably, the method further comprises the step of defining one or more danger-zone subregions within the boundary using the graphical user interface.

Preferably, the method further comprises the step of automatically assigning a no-cutting attribute to a portion of a mower-safe region.

Preferably, the step of controlling the robotic lawn mower comprises controlling the robotic lawnmower to:
- traverse a first portion of a mower-safe subregion, the first portion assigned with a cutting attribute, while cutting;
- traverse a second portion of the mower-safe subregion, the second portion assigned with a no-cutting attribute, without cutting; and
- traverse a subsequent portion of the mower-safe subregion, the third portion assigned with a cutting attribute, while cutting.

Preferably, the step of controlling the robotic lawn mower comprises generating a route in the first and subsequent portion of the mower-safe subregion to minimize time or distance traversing the second portion of the mower-safe subregion.

Preferably, the step of controlling the robotic lawn mower comprises generating a route to minimize number of times the first or subsequent portions of the mower-safe subregion are crossed by the robotic lawn mower.

Preferably, the method further comprises detecting a barrier obstructing the robotic lawn mower's traversal across a mower-safe subregion using the robotic lawn mower when traversing the plot of land and automatically generating a mowing route between the obstructed areas of the subregion via a portion of a mower-safe subregion that is assigned with a no-cutting attribute.

Preferably, the method further comprises recording sensor measurements using the robotic lawn mower when traversing the plot of land and updating a control attribute based on the sensor measurements.

Preferably, the method comprises the step of deploying different robotic lawn mowers to different subregions based on properties of the subregions and the assigned control attributes of the subregions.

Preferably, the method comprises the step of deploying different numbers of robotic lawn mowers to different subregions based on properties of the subregions and the assigned control attributes of the subregions.

Preferably, the step of defining a boundary of the plot of land using the graphical user interface comprises limiting the area of the boundary based on robotic mower capabilities.

Preferably, the method further comprises the step of determining an optimal charging point for a robotic lawn mower based on the defined boundary and subregions.

According to a second aspect of the present invention, there is provided a computer program according to claim 12.

According to a third aspect of the present invention, there is provided a computer program product according to claim 13.

According to a fourth aspect of the present invention, there is provided an apparatus according to claim 14.

According to a fifth aspect of the present invention, there is provided a system according to claim 15.

### Brief description of drawings

Embodiments of the present invention will now be described, by way of example only, with reference to the drawings, in which:
Figure 1 is a flowchart of a method of controlling a robotic lawn mower, in accordance with an embodiment of the present invention;
Figure 2 illustrates, in schematic form, a satellite image of a plot of land;
Figure 3 illustrates, in schematic form, a map with a defined boundary and subregions of the plot of land including lawn islands to be mowed, in accordance with an embodiment of the present invention;
Figure 4 illustrates, in schematic form, a map with a defined boundary and subregions of the plot of land including lawn islands to be mowed, with a mower being routed around a barrier in accordance with another embodiment of the present invention;
Figure 5 illustrates, in schematic form, a robotic lawn mower, in accordance with an embodiment of the present invention; and
Figure 6 illustrates, in schematic form, a robotic lawn mower, in accordance with another embodiment of the present invention.

### Description of embodiments

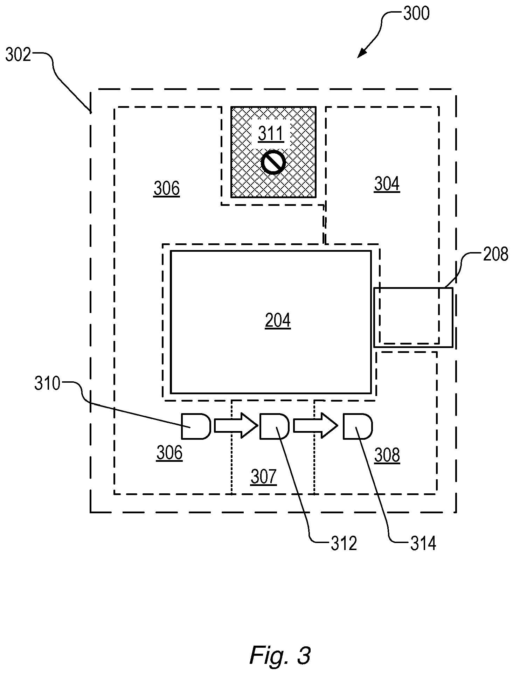

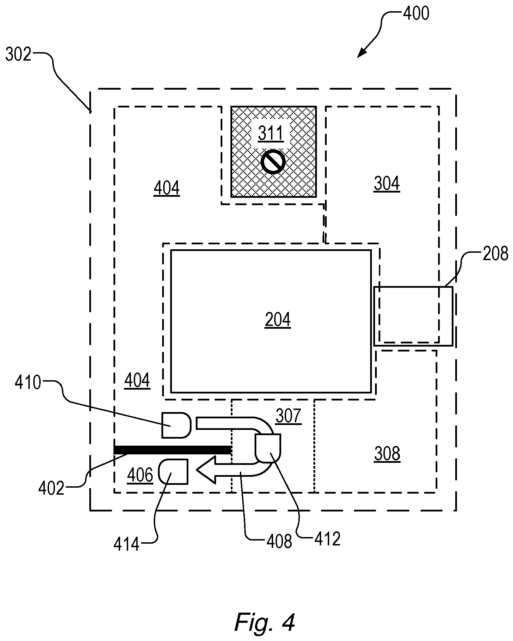

In the Figures, elements labelled with reference numerals found in the preceding Figures represent the same elements as described for the respective preceding Figure. For example, feature 304 in Figure 4 corresponds to the same feature 304 as described with reference to Figure 3.

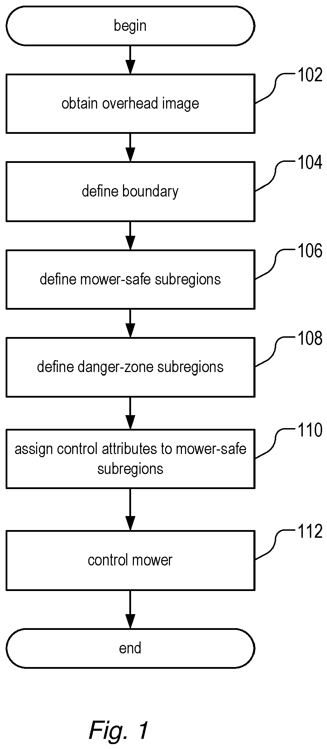

In embodiments, for example as described with reference to Figures 1 to 4, boundaries and subregions of a plot of land including lawn islands to be mowed are defined by users via a mapping mechanism.

Figure 1 is a flowchart of a method of controlling a robotic lawn mower, in accordance with an embodiment of the present invention. With reference to Figures 1 to 4, the method has the following steps.

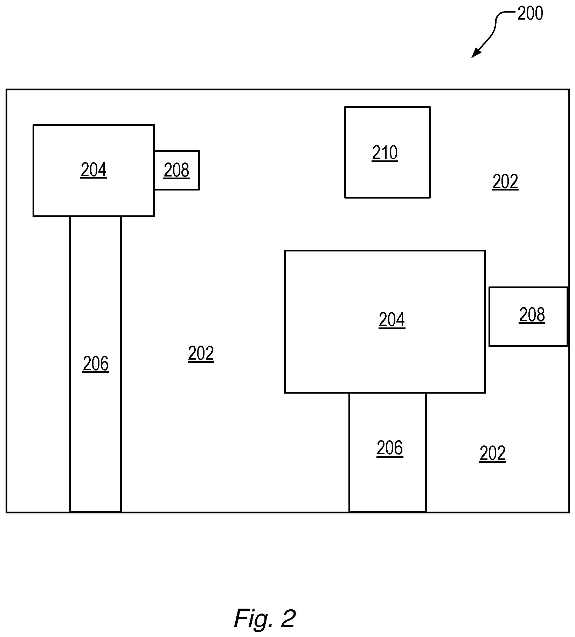

102: obtaining an overhead image 200 of a plot of land. For example, Figure 2 represents an overhead satellite image 200 of a plot of land including lawns 202, houses 204 and obstacles including driveways 206, garages 208 and a playground 210. The satellite image 200 corresponds to the postal address of the plot of land, which can be provided by users or automatically detected by the robotic lawn mower. Machine learning algorithms can be used for improving the quality of the satellite image obtained.

104: defining a boundary 302 of the plot of land, as shown in Figure 3, using a graphical user interface. This step may comprise limiting the area of the boundary based on robotic mower capabilities, such as battery capacity or mowing speed.

106: defining one or more mower-safe subregions 304, 306-308 (e.g. including lawn islands, paths, driveways) within the boundary using the graphical user interface. Mower-safe regions may contain obstacles or buildings (e.g. the part of garage 208 in subregion 304 in Figure 3) that the robotic mower can detect and automatically avoid.

108: defining one or more danger-zone subregions 311 (e.g. play area, pond) within the boundary using the graphical user interface.

110: assigning a control attribute to a mower-safe subregion. This may involve assigning different control attributes to different mower-safe subregions. A control attribute may comprise a no-cutting attribute or a cutting attribute assigned to one or more portions of the subregion. A no-cutting attribute is typically assigned automatically to a portion of a mower-safe region by the robotic mower, for example using a machine learning algorithm to detect an absence of grass on a driveway. Examples of cutting attributes are: cutting-height, cutting-time, cutting-frequency and cutting-pattern. The control attributes may be set up automatically by the robotic lawn mower or manually assigned by users (e.g. mowing a certain region of a golf course only during the night on certain days) for example using the graphical user interface. A navigation algorithm implementing a spiral pattern and/or row-by-row cutting pattern may be used to reduce the mowing times (e.g. mowing a grass area only once as a human would try to do manually).

112: controlling the robotic lawn mower to traverse the plot of land while its operation in a subregion is based on (a) the location of the mower in relation to the plot of land, (b) the defined boundary and one or more subregions and (c) the assigned control attributes. While the robotic lawn mower is not in cutting operation (e.g. travelling on not-for-cutting portions of mower-safe subregions, parking, charging, etc.), the cutting blade(s) are turned off.

With reference to Figure 3 the step 112 of controlling the robotic lawn mower may comprise controlling the robotic lawnmower (310-314) to:
- traverse 310 a first portion 306 of a mower-safe subregion, the first portion assigned with a cutting attribute, while cutting (e.g. with blades turned on, or extended);
- traverse 312 a second portion 307 of the mower-safe subregion 307, the second portion assigned with a no-cutting attribute, without cutting (e.g. with blades turned off, or retracted); and
- traverse 314 a subsequent portion 308 of the mower-safe subregion, the subsequent portion assigned with a cutting attribute, while cutting.

Figure 3 illustrates that, with the mapping mechanism, a map 300 can be derived from the satellite image 200 of the plot of land. A user defines a boundary 302 and mower-safe subregions 304, 306-308 on the map via a graphical user interface. The dashed outline enclosing reference numerals 306-308 is one subregion. The user initially assigns a cutting attribute to the whole subregion 306-308, but the robotic mower reassigns (or additionally assigns) a no-cutting attribute to the portion 307, when it detects there is no grass on the driveway 206. The user is able to define different cutting attributes to the different subregions 304 and 306-308. For example, different a cutting heights or different cutting times may be assigned to the different respective subregions. This may be particularly useful in commercial applications, such as at a golf course, where for rough and fairway different cutting height or different cutting frequency are appropriate. The graphical user interface provides users with a variety of functions comprising, for example, classifying the plot of land into danger-zone regions (e.g. the playground 210) and mower-safe subregions (e.g. the subregions 304 and 306-308) where a robotic mower can safely be allowed to traverse under its own control. The classification may be implemented in a variety of ways. For example, if a subregion is classified by being given a specific name, then that name is a control attribute. For example, if the subregion is categorised by being referenced by a data storage variable, then that variable is a control attribute. In this example, the method 100 enables suggestions to be made in relation to the boundary 302 and the mower-safe subregions 304 and 306-308 based on the satellite image of the plot of land 200 using an image analysis technique.

The method may also include generating a route in the first 306 and subsequent 308 mower-safe subregions to minimize time or distance traversing the second mower-safe subregion 307. Thus, having mowed a lawn island 306, the mower is routed on to the next lawn island 308 (if required) via, for example, a driveway portion 307 or pedestrian path (minimizing the time off the grass and/or distance across the path), until all lawn islands within the external boundary are covered

The method may also include generating a route to minimize number of times the first 306 or subsequent 308 mower-safe subregions are crossed by the robotic lawn mower. Thus, the path planning algorithm minimizes the number of times a patch of grass is crossed, while making sure all the patches of grass are covered even in worst case scenario of sensory inaccuracies.

According to an embodiment of the present invention, as shown in Figure 3, the mower-safe subregions 304 and 306 are adjacent to each other. According to another embodiment of the present invention (not shown), mower-safe subregions may be isolated.

With reference to Figure 4, the method may also include detecting a barrier 402 obstructing the robotic lawn mower's traversal across a mower-safe subregion 404, 406, 307, 308. The barrier is detected using the robotic lawn mower when traversing the plot of land. A mowing route is automatically or manually generated between the obstructed areas of the subregion 404, 406 via a different mower-safe portion 307 of the subregion that is assigned with a no-cutting attribute. Thus, the step 112 of controlling the robotic lawn mower involves controlling the robotic lawnmower (410-414) to:
- traverse 410 a first portion 404 of a mower-safe subregion (the starting obstructed area), the first portion assigned with a cutting attribute, while cutting;
- traverse 412 a second portion 307 of the mower-safe subregion, the second portion assigned assigned with a no-cutting attribute, without cutting; and
- traverse 414 a subsequent portion 406 of the mower-safe subregion (i.e. the destination obstructed area), the subsequent portion assigned with a cutting attribute, while cutting.

In more detail, barriers across divided subregions not marked on the map can be detected by the robotic lawn mower when in use and added to the map. A mowing route is automatically or manually generated for the robotic lawn mower to traverse between the divided portions of the subregions (e.g. using coordinates of the boundary, barrier and subregions defined on the map). As illustrated in Figure 4, a fence 402 is an example of a barrier dividing portions 404 and 406, which is not present or visible in the overhead image or was ignored when defining the subregions. The fence 402 is detected by the robotic lawn mower 410 and added to the map 400. The robotic lawn mower 410 re-routes via a different portion of a subregion (i.e. routing 408 via the subregion portion 307 corresponding to the driveway 206 while turning off the cutting blades), so that the robotic lawn mower 410 can safely traverse between the cutting portions 404 and 406 without bumping into the fence 402. According to another embodiment of the present invention, a mowing route may be prompted for and/or manually defined by users.

The method may also include recording sensor measurements using the robotic lawn mower when traversing the plot of land and assigning or updating a control attribute based on the sensor measurements. Properties of the subregions, including environmental factors (e.g. temperature), obstacles and inaccessible areas, moisture level and amount of leaves, may be detected by sensors on the robotic lawn mower when in use, then one or more of the control attributes can be automatically assigned, added to and/or updated for that subregion (e.g. weed density could be measured, or moisture level could be measured and the watering frequency assigned for that subregion should be updated accordingly, or e.g. grass length could be measured and the cutting height assigned for that subregion should be updated accordingly). The detected properties can be displayed on the graphical user interface, providing users immediate feedback on the properties of the subregions. For example, a city council may, based on the amount of leaves detected for a subregion, allocate appropriate workforce to clean the subregion. The control attributes may be used to manage other smart garden products within this environment, such as automatic watering systems.

The method may also include deploying different robotic lawn mowers to different subregions based on properties of the subregions and the assigned control attributes of the subregions. Different robotic lawn mowers may be assigned to different subregions based on properties (such as the aforementioned properties) of the subregions and the assigned control attributes of the subregions, so that the control of the robotic lawn mower is scheduled for the subregions on an individual basis.

The method may also include deploying different numbers of robotic lawn mowers to different subregions based on properties (such as the aforementioned properties) of the subregions and the assigned control attributes of the subregions.

The method may also include determining an optimal charging point for a robotic lawn mower based on the defined boundary and subregions. The optimal charging point may be indicated on the graphical user interface. This makes mowing a large area easier and more efficient (e.g. for a golf course where a fleet of robots is in operation).

In embodiments, for example as shown in Figures 3 to 4, portions 306, 308 of a subregion representing lawn areas that should be cut are assigned a cutting attribute. Portions of subregions representing areas that should not be mowed, which may or may not have grass (e.g. driveway of a house 307 as shown in Figure 3, rough and putting green of a golf course, etc.), are automatically detected and assigned a no-cutting attribute by the mower. The use of cutting attributes in the method 100 enables users to customise mowing tasks in a convenient manner, which is of significant practicality to the field of lawn mowing.

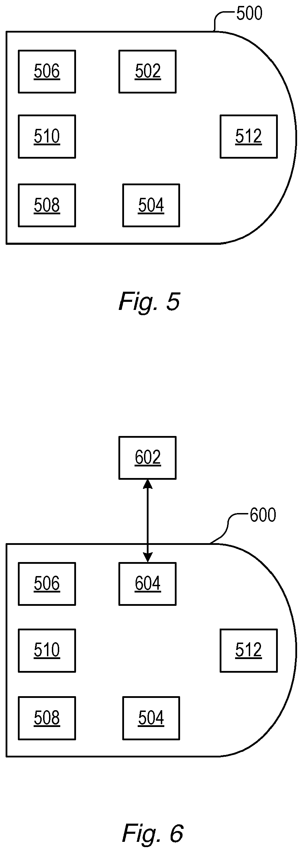

Figure 5 illustrates, in schematic form, a robotic lawn mower 500 comprising a mowing control module 502 implementing the method 100 in accordance with embodiments of the present invention, one or more lawn property detectors 504 (for detecting properties of the subregions), one or more visual sensor systems 506, a charging unit 508, one or more position sensors 510 and a user interface module 512. In this example, the user interface module 512 is integrated with the robotic lawn mower 500. According to another embodiment of the present invention (not shown), the user interface module 512 is provided by another device that is able to display images (e.g. user's mobile phone) connected wirelessly to the mower directly or via the internet. The mower may then only have an on/off switch and an emergency stop button.

The one or more positioning sensors 510 of the robotic lawn mower 500 are configured to determine the location of the robotic lawn mower 500, which comprises at least one Global Navigation Satellite System (GNSS) receiver. The GNSS receiver may be mounted on a receiving base station located in a charging hub, located at the charging point, that supplies charge to the charging unit 508 of the robotic lawn mower 500. A data fusion algorithm, which processes GNSS signals, odometry data and Inertial Measurement Unit (IMU) signals, can be used to improve accuracy of position estimation in a complicated environment with a limited satellite connection, for example, places having many trees and concrete buildings. The positioning sensors 510 are capable of determining the location of the robotic lawn mower 500 to within 10 cm accuracy.

The one or more visual sensor systems 506 of the robotic lawn mower 500 are configured to enable the detection of the edges of the lawn islands, obstacles on the lawn islands, and pathways connecting different lawn islands. The visual sensor systems may use a machine learning algorithm to identify grass. A variety of light detection and ranging (LIDAR) sensors can also be used for the detection of physical objects so that the robotic lawn mower 500 can be guided to move between the subregions without bumping into objects.

The robotic lawn mower 500 is an example of an apparatus specifically adapted to carry out the steps of the method of controlling a robotic lawn mower described with reference to Figures 1 to 4.

Figure 6 illustrates a robotic lawn mower 600 according to another embodiment of the present invention, wherein a mowing control module 602, which implements the method 100 in accordance with embodiments of the present invention, is implemented on another source (e.g. cloud server). In this example, one or more receiving units 604 of the robotic lawn mower 600 receive outputs of the mowing control module 602 so that the robotic lawn mower 600 is controlled by the mowing control module 602 in accordance with the methods described with reference to Figures 1-4.

Embodiments may be implemented by a computer program comprising computer readable instructions which, when run on suitable computer apparatus such as mowing control modules 502 or 602, causes the computer apparatus to perform the method described with reference to Figures 1 to 4. A computer program product such as a disk or solid-state memory device may store the computer program. Figure 6 illustrates a system comprising a robotic lawn mower 600 and a processing unit 602 configured to control the robotic lawn mower 600 according to the method described with reference to Figures 1 to 4.

In embodiments, for example as shown in Figures 5 and 6, the one or more sensors (e.g. cameras) are configured to observe the properties of the subregions in relation to lawn islands to be mowed.

According to another embodiment (not shown), the robotic lawn mower comprises one or more security detectors, configured to report to users in alarming situations, for example, when the robotic lawn mower is stuck or stolen.

## Claims

1. A method of controlling a robotic lawn mower, comprising the steps:
- obtaining an overhead image (102) of a plot of land;
- defining a boundary (104) of the plot of land using a graphical user interface;
- defining one or more mower-safe subregions (106) within the boundary using the graphical user interface;
- assigning a control attribute (110) to a mower-safe subregion;
- controlling the robotic lawn mower (112) to traverse the plot of land while its operation in a subregion is based on (a) the location of the mower in relation to the plot of land, (b) the defined boundary and one or more subregions and (c) the assigned control attribute.

2. The method of claim 1, wherein the control attribute comprises a cutting attribute selected from a group consisting of: cutting-height, cutting-time, cutting-frequency and cutting-pattern.

3. The method of claim 1 or claim 2, further comprising the step of defining one or more danger-zone subregions within the boundary using the graphical user interface.

4. The method of any preceding claim, further comprising the step of automatically assigning a no-cutting attribute to a portion of a mower-safe region.

5. The method of claim 4, wherein the step of controlling the robotic lawn mower comprises controlling the robotic lawnmower to:
- traverse 310 a first portion 306 of a mower-safe subregion, the first portion assigned with a cutting attribute, while cutting;
- traverse 312 a second portion 307 of the mower-safe subregion, the second portion assigned with a no-cutting attribute, without cutting; and
- traverse 314 a subsequent portion 308 of the mower-safe subregion, the third portion assigned with a cutting attribute, while cutting.

6. The method of claim 5, wherein the step of controlling the robotic lawn mower comprises generating a route in the first and subsequent portion of the mower-safe subregion to minimize time or distance traversing the second portion of the mower-safe subregion.

7. The method of any claim 5 or claim 6, wherein the step of controlling the robotic lawn mower comprises generating a route to minimize number of times the first or subsequent portions of the mower-safe subregion are crossed by the robotic lawn mower.

8. The method of any preceding claim, further comprising detecting a barrier obstructing the robotic lawn mower's traversal across a mower-safe subregion using the robotic lawn mower when traversing the plot of land and automatically generating a mowing route between the obstructed areas of the subregion via a portion of a mower-safe subregion that is assigned with a no-cutting attribute.

9. The method of any preceding claim, comprising the step of deploying different robotic lawn mowers to different subregions based on properties of the subregions and the assigned control attributes of the subregions.

10. The method of any preceding claim, comprising the step of deploying different numbers of robotic lawn mowers to different subregions based on properties of the subregions and the assigned control attributes of the subregions.

11. The method of any preceding claim, wherein the step of defining a boundary of the plot of land using the graphical user interface comprises limiting the area of the boundary based on robotic mower capabilities.

12. A computer program comprising computer readable instructions which, when run on suitable computer apparatus, cause the computer apparatus to control a robotic lawn mower and to perform the method of any preceding claim.

13. A computer program product comprising the computer program of claim 12.

14. An apparatus specifically adapted to carry out the steps of the method of controlling a robotic lawn mower according to any of claims 1 to 11, the apparatus being configured as a robotic lawn mower.

15. A system comprising a robotic lawn mower and a processing unit configured to control the robotic lawn mower according to the method of any of claims 1 to 11.

## Patentansprüche

1. Verfahren zum Steuern eines Roboter-Rasenmähers, die folgenden Schritte umfassend:
- Erlangen eines Übersichtsbilds (102) eines Grundstücks;
- Definieren einer Begrenzung (104) des Grundstücks unter Verwendung einer grafischen Benutzerschnittstelle;
- Definieren einer oder mehrerer mähersicheren Teilregionen (106) innerhalb der Begrenzung unter Verwendung der grafischen Benutzerschnittstelle;
- Zuweisen eines Steuerattributs (110) zu einer mähersicheren Teilregion;
- Steuern des Roboter-Rasenmähers (112) zum Durchqueren des Grundstücks, während sein Betrieb in einer Teilregion auf (a) dem Ort des Mähers im Verhältnis zu dem Grundstück, (b) der definierten Begrenzung und einer oder mehrerer Teilregionen und (c) dem zugewiesenen Steuerattribut basiert.

2. Verfahren nach Anspruch 1, wobei das Steuerattribut ein Schneiden-Attribut umfasst, ausgewählt aus einer Gruppe, bestehend aus: Schnitthöhe, Schneidzeit, Schneidhäufigkeit und Schneidmuster.

3. Verfahren nach Anspruch 1 oder Anspruch 2, ferner umfassend den Schritt des Definierens einer oder mehrerer Gefahrenzonen-Teilregionen innerhalb der Begrenzung unter Verwendung der grafischen Benutzerschnittstelle.

4. Verfahren nach einem der vorhergehenden Ansprüche, ferner umfassend den Schritt des automatischen Zuweisens eines Nicht-Schneiden-Attributs zu einem Abschnitt einer mähersicheren Region.

5. Verfahren nach Anspruch 4, wobei der Schritt des Steuerns des Roboter-Rasenmähers umfasst, den Roboter-Rasenmäher zu steuern zum:
- Durchqueren 310 eines ersten Abschnitts 306 einer mähersicheren Teilregion, wobei dem ersten Abschnitt ein Schneiden-Attribut zugewiesen ist, während geschnitten wird;
- Durchqueren 312 eines zweiten Abschnitts 307 der mähersicheren Teilregion, wobei dem zweiten Abschnitt ein Nicht-Schneiden-Attribut zugewiesen ist, ohne zu schneiden; und
- Durchqueren 314 eines anschließenden Abschnitts 308 der mähersicheren Teilregion, wobei dem dritten Abschnitt ein Schneiden-Attribut zugewiesen ist, während geschnitten wird.

6. Verfahren nach Anspruch 5, wobei der Schritt des Steuerns des Roboter-Rasenmähers umfasst, eine Route in dem ersten und dem anschließenden Abschnitt der mähersicheren Teilregion zu erzeugen, um Zeit oder Entfernung beim Durchqueren des zweiten Abschnitts der mähersicheren Teilregion zu minimieren.

7. Verfahren nach einem der Ansprüche 5 oder 6, wobei der Schritt des Steuerns des Roboter-Rasenmähers umfasst, eine Route zu erzeugen, um die Anzahl der Male zu minimieren, die der erste oder der anschließende Abschnitt der mähersicheren Teilregion durch den Roboter-Rasenmäher gekreuzt werden.

8. Verfahren nach einem der vorhergehenden Ansprüche, ferner umfassend Detektieren einer Barriere, die die Durchquerung des Roboter-Rasenmähers durch eine mähersichere Teilregion behindert, unter Verwendung des Roboter-Rasenmähers beim Durchqueren des Grundstücks und automatisches Erzeugen einer Mähroute zwischen den behinderten Bereichen der Teilregion über einen Abschnitt einer mähersicheren Teilregion, dem ein Nicht-Schneiden-Attribut zugewiesen ist.

9. Verfahren nach einem der vorhergehenden Ansprüche, umfassend den Schritt des Einsetzens verschiedener Roboter-Rasenmäher in verschiedenen Teilregionen basierend auf Eigenschaften der Teilregionen und den zugewiesenen Steuerattributen der Teilregionen.

10. Verfahren nach einem der vorhergehenden Ansprüche, umfassend den Schritt des Einsetzens verschiedener Anzahlen von Roboter-Rasenmähern in verschiedenen Teilregionen basierend auf Eigenschaften der Teilregionen und den zugewiesenen Steuerattributen der Teilregionen.

11. Verfahren nach einem der vorhergehenden Ansprüche, wobei der Schritt des Definierens einer Begrenzung des Grundstücks unter Verwendung der grafischen Benutzerschnittstelle umfasst, den Bereich der Begrenzung basierend auf Fähigkeiten von Roboter-Mähern zu begrenzen.

12. Computerprogramm, umfassend computerlesbare Anweisungen, die, wenn sie auf einer geeigneten Computervorrichtung ausgeführt werden, die Computervorrichtung veranlassen, einen Roboter-Rasenmäher zu steuern und das Verfahren nach einem der vorhergehenden Ansprüche durchzuführen.

13. Computerprogrammprodukt, umfassend das Computerprogramm nach Anspruch 12.

14. Vorrichtung, spezifisch angepasst zum Ausführen der Schritte des Verfahrens zum Steuern eines Roboter-Rasenmähers nach einem der Ansprüche 1 bis 11, wobei die Vorrichtung als ein Roboter-Rasenmäher konfiguriert ist.

15. System, umfassend einen Roboter-Rasenmäher und eine Verarbeitungseinheit, konfiguriert zum Steuern des Roboter-Rasenmähers gemäß dem Verfahren nach einem der Ansprüche 1 bis 11.

## Revendications

1. Procédé de commande d'une tondeuse à gazon robotique, comprenant les étapes de :
- obtention d'une image aérienne (102) d'une parcelle de terrain ;
- définition d'une frontière (104) de la parcelle de terrain en utilisant une interface utilisateur graphique ;
- définition d'une ou de plusieurs sous-régions de sécurité pour la tondeuse (106) à l'intérieur de la frontière en utilisant l'interface utilisateur graphique ;
- attribution d'un attribut de commande (110) à une sous-région de sécurité pour la tondeuse ; et
- commande de la tondeuse à gazon robotique (112) pour qu'elle traverse la parcelle de terrain tandis que son fonctionnement dans une sous-région est basé sur (a) la localisation de la tondeuse en relation avec la parcelle de terrain, (b) la frontière définie et une ou plusieurs sous-régions et (c) l'attribut de commande attribué.

2. Procédé selon la revendication 1, dans lequel l'attribut de commande comprend un attribut de coupe sélectionné parmi un groupe constitué par : la hauteur de coupe, le temps de coupe, la fréquence de coupe et le motif de coupe.

3. Procédé selon la revendication 1 ou la revendication 2, comprenant en outre l'étape de définition d'une ou de plusieurs sous-régions de zone de danger à l'intérieur de la frontière en utilisant l'interface utilisateur graphique.

4. Procédé selon l'une quelconque des revendications précédentes, comprenant en outre l'étape d'attribution automatique d'un attribut de non coupe à une partie d'une région de sécurité pour la tondeuse.

5. Procédé selon la revendication 4, dans lequel l'étape de commande de la tondeuse à gazon robotique comprend la commande de la tondeuse à gazon robotique pour :
- traverser 310 une première partie 306 d'une sous-région de sécurité pour la tondeuse, la première partie se voyant attribuer un attribut de coupe, pendant la coupe ;
- traverser 312 une deuxième partie 307 de la sous-région de sécurité pour la tondeuse, la deuxième partie se voyant attribuer un attribut de non coupe, sans coupe ; et
- traverser 314 une partie subséquente 308 de la sous-région de sécurité pour la tondeuse, la troisième partie se voyant attribuer un attribut de coupe, pendant la coupe.

6. Procédé selon la revendication 5, dans lequel l'étape de commande de la tondeuse à gazon robotique comprend la génération d'un parcours dans la première partie et la/les partie(s) subséquente(s) de la sous-région de sécurité pour la tondeuse pour réduire au minimum la traversée en termes de temps ou de distance de la deuxième partie de la sous-région de sécurité pour la tondeuse.

7. Procédé selon la revendication 5 ou la revendication 6, dans lequel l'étape de commande de la tondeuse à gazon robotique comprend la génération d'un parcours pour réduire au minimum le nombre de fois selon lequel la première partie ou la/les partie(s) subséquente(s) de la sous-région de sécurité pour la tondeuse est ou sont croisée(s) par la tondeuse à gazon robotique.

8. Procédé selon l'une quelconque des revendications précédentes, comprenant en outre la détection d'une barrière qui obstrue la traversée par la tondeuse à gazon robotique d'une sous-région de sécurité pour la tondeuse en utilisant la tondeuse à gazon robotique lors de la traversée de la parcelle de terrain et en générant automatiquement un parcours de tonte entre les zones obstruées de la sous-région via une partie d'une sous-région de sécurité pour la tondeuse qui se voit attribuer un attribut de non coupe.

9. Procédé selon l'une quelconque des revendications précédentes, comprenant l'étape de déploiement de tondeuses à gazon robotiques différentes sur des sous-régions différentes sur la base de propriétés des sous-régions et des attributs de commande attribués des sous-régions.

10. Procédé selon l'une quelconque des revendications précédentes, comprenant l'étape de déploiement de nombres différents de tondeuses à gazon robotiques sur des sous-régions différentes sur la base de propriétés des sous-régions et des attributs de commande attribués des sous-régions.

11. Procédé selon l'une quelconque des revendications précédentes, dans lequel l'étape de définition d'une frontière de la parcelle de terrain en utilisant l'interface utilisateur graphique comprend la limitation de la zone de la frontière sur la base de capacités de tondeuse robotique.

12. Programme informatique comprenant des instructions lisibles par ordinateur qui, lorsqu'elles sont exécutées sur un appareil informatique approprié, forcent l'appareil informatique à commander une tondeuse à gazon robotique et à réaliser le procédé selon l'une quelconque des revendications précédentes.

13. Progiciel comprenant le programme informatique selon la revendication 12.

14. Appareil adapté spécifiquement pour mettre en œuvre les étapes du procédé de commande d'une tondeuse à gazon robotique selon l'une quelconque des revendications 1 à 11, l'appareil étant configuré en tant que tondeuse à gazon robotique.

15. Système comprenant une tondeuse à gazon robotique et une unité de traitement configurée pour commander la tondeuse à gazon robotique selon le procédé selon l'une quelconque des revendications 1 à 11.
